# EUROPEAN PATENT APPLICATION

(11) **EP 2 878 388 A1**
(43) Date of publication of application: **03.06.2015**
(21) Application number: 14460067.3
(22) Date of filing: 14.10.2014
(51) Int. Cl.: B09B 3/00, B29B 17/00

(54) **A method and a device for the thermal treatment of contaminated thin steel wire in particular cord of waste tires**

(30) Priority: 27.11.2013 PL 40628713
(71) Applicant: "ELKON" zaklad konstrukcji wdrozen urzadzen elektronicznych i ukladow automatyki, 44-200 Rybnik (PL)
(72) Inventor: Konopka, Zdzis?aw, 44-200 Rybnik (PL); Konopka, Krzysztof, 44-200 Rybnik (PL)

(57) **Abstract**

The inventions solve the problem of melting a steel wire which is extremely thin, including but not limited to the wire from the cord of worn out tyres, which is metal scrap separated in the disposal process of motor vehicle worn out tyres. The said cord poses a gross ecological problem.

The essence of the invention submitted is the method of the thermal processing of contaminated steel wire, including but not limited to the cord of worn out tyres, whose characteristic is that a thin wire with contamination is heated continuously and gradually until the stage of the wire tempering in the temperature of 600 - 1000 Centigrade, and then, through the temperature growth, a thin wire is brought to the stage of melting and separation of slag and steel in the temperature from 1450 to 1550 Centigrade, and afterwards it is advantageous to conduct the process of continuous casting or die-casting of cast iron or steel with the use of the heated steel.

The object of the invention submitted is the device for the thermal processing of contaminated thin steel wire, including but not limited to the cord of worn out tyres, whose characteristic is that regardless of the arrangement: vertical, diagonal or angular one, this device is equipped with a hopper, feeder, induction heating chamber and heating and melting induction furnace, re-heating and slag and steel separating furnace; whereas, steel flows through the upper outlet or/and lower outlet to the container/furnace, and in the vertical arrangement, the extraction system for fumes and gases is settled at the top of the container, and in the angular arrangement, it is settled at the joint of the feeder and/or induction pass-through heater.

The invention under consideration is illustrated in figure 1.

## Description

The object of the invention is the method of melting an extremely thin steel wire, including but not limited to the cord of worn out tyres, which is metal scrap separated in the disposal process of motor vehicle worn out tyres and the set of devices which forms a technological line for the processing of steel cords of motor vehicle worn out tyres.

The steel cord which consists of hard and resilient thin steel wires is technological waste formed in the disposal process of motor vehicle worn out tyres. The steel cord which is not managed but landfilled poses an ecological hazard.

What is problematic in processing the cord is a low diameter of wires, their resilience and contamination with non-separated tyre components such as rubber and textile cord. Melting of the cord in blast furnaces together with other scrap is dangerous due to the risk of explosion and it is not economical in terms of its spatial structure. The ratio of mass to the volume is low; thus, the specific mass of the cord is lower than the mass of the melted metal. The cord floats on the surface which makes it harder to melt.

The attempts to solve the melting problem of disintegrated or pressed cord in the form of briquettes are described in the patent no PL213165 B1 and PL 210 380 B1. In the first case, the melting technology requires the high-degree disintegration of the cord obtained in the disposal process of tyres, which is a technical and economical problem. In the second case, the technology requires heating of the cord in order to make briquettes which must be cooled down for the transport purposes. This also causes substantial energy losses.

A technical aspect here is inventing a method and a device for processing the cord of worn out tyres.

The essence of the invention submitted is the method of the thermal processing of contaminated steel wire, including but not limited to the cord of worn out tyres, whose characteristic is that a thin wire with contamination is heated continuously and gradually until the stage of the wire tempering in the temperature from 600 - 1000 Centigrade, and then, through the temperature growth, a thin wire is brought to the stage of melting and separation of slag and steel in the temperature from 1450 to 1550 Centigrade, and afterwards it is advantageous to conduct the process of continuous casting or die-casting of cast iron or steel with the use of the heated steel.

The object of the invention submitted is the device for the thermal processing of contaminated thin steel wire, including but not limited to the cord of worn out tyres, whose characteristic is that regardless of the arrangement: vertical, diagonal or angular one, this device is equipped with a hopper, feeder, induction heating chamber and heating and melting induction furnace, re-heating and slag and steel separating furnace; whereas, steel flows through the upper outlet or/and bottom outlet to the container/furnace, and in the vertical arrangement, the extraction system for fumes and gases is settled at the top of the container, and in the angular arrangement, it is settled at the joint of the feeder and/or induction pass-through heater.

The advantages of the solutions according to the inventions in relation to the recent solutions are as follows:
- the thermal continuity of the technological process is maintained which minimises energy consumption. Each subsequent stage of the technology is conducted in a higher temperature without the need of cooling down the intermediate product as it is done in the technology resulting from the patent no PL 210 380 B1,
- the cord is subject to melting in the form available after, for instance, mechanical separation of rubber without the need of its disintegration to a loose form as it is done in the technology described in the patent no PL213165 B1,
- there is no burning-off of a graphite sleeve and therefore there is no undesired carbonization of the steel obtained through melting the cord as it is the case with the patent no PL213165 B1,
- an explosion hazard is eliminated as with the direct loading of the cord to the blast furnace,
- the steel obtained from the melted cord is a product of a value a few times higher at the final processing stage than the feedstock of the blast furnace obtained with other solutions, eg. patent no PL213165 B1 or direct melting of the cord in the blast furnace.

The technical implementation of the method and the device for melting the steel cord (wire) according to the invention is presented in figure 1, 2 and 3. Figure 1 presents an exemplary set of devices for processing steel cords of motor vehicle worn out tyres in the angular arrangement. Figure 2 presents an exemplary set of devices for processing steel cords of motor vehicle worn out tyres in the arrangement with a diagonal preparation chamber. Figure 3 presents an exemplary set of devices for processing steel cords of motor vehicle worn out tyres in the arrangement with a vertical preparation chamber.

The exemplary implementation of the invention is that a thin wire with contamination is heated continuously and gradually until the stage of the wire tempering in the temperature of 800 Centigrade and then, through the temperature growth, a thin wire is brought to the stage of melting and separation of slag and steel in the temperature from 1450 to 1500 Centigrade, and afterwards it is advantageous to conduct the process of continuous casting or die-casting of cast iron or steel with the use of the heated steel.

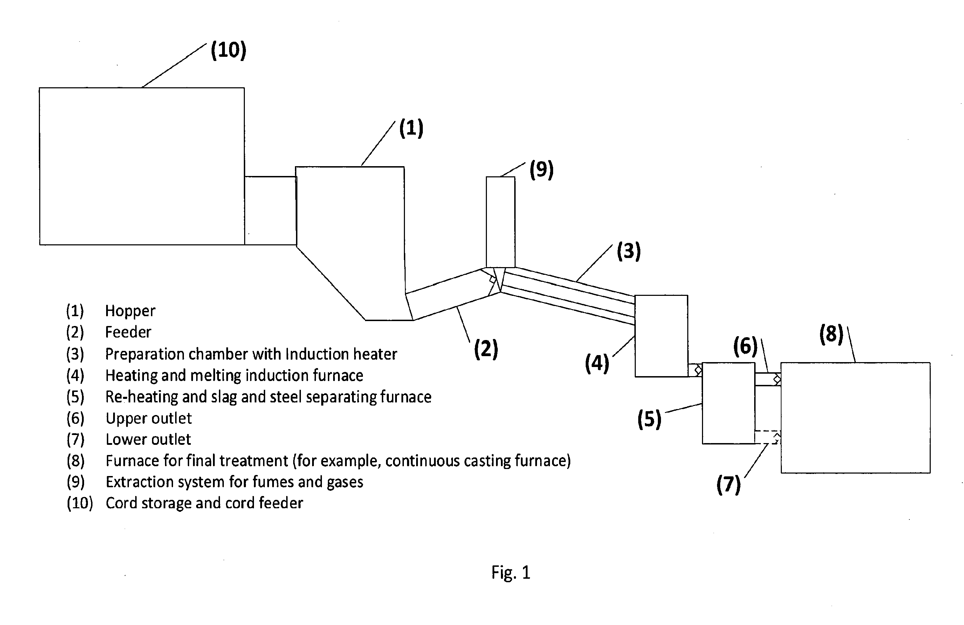

An example of the solution according to the invention is the set of devices for processing steel cords of motor vehicle worn out tyres in the angular arrangement presented in figure 1, forming a technological line which is equipped with the following: a device for storing and feeding the cord 10, hopper 1, feeder 2, induction heating chamber 3, and heating and melting induction furnace 4, re-heating and slag and steel separating furnace 5, where steel flows through the upper outlet 6 or/and through the lower outlet 7 to the furnace 8. The extraction system for fumes and gases 9 is provided in the exemplary solution at the joint of the feeder 2 and the induction pass-through heater 3.

The cord in the form available after, for instance, mechanical separation of rubber is loaded from the hopper 1 to the preparation chamber 3 by means of a feeder 2, for instance, a feeding screw, ram feeder, vibratory feeder or a roller feeder, and the chamber is of a pass-through type and it is pipe-shaped in the diagonal position at any angle resulting from the designing possibilities in a respective facility, and in this chamber the cord is heated to the temperature from 600 - 1000 Centigrade for the purpose of tempering (softening) and burning-off of the rubber and textile cord residues which were left after the process of mechanical separation of rubber and steel, and then in the continuous process of its heating and pushing, it is transported to the induction furnace 4, where "hot" crucible eg. from SiC, which is heated in the variable electro-magnetic field, which possibly is long and which has short diameter, heats the cord further until it is melted down, and afterwards the melted cord flows through the outlet at the bottom of crucible or at the side of crucible to the next induction furnace 5, where it is heated to the temperature of 1500 Centigrade and automatically separated from slag, and from the furnace crucible 5 it flows in a continuous stream or in portions to the prepared moulds or to the device 8, where the alloy is processed further, eg. continuous casting of steel rods.

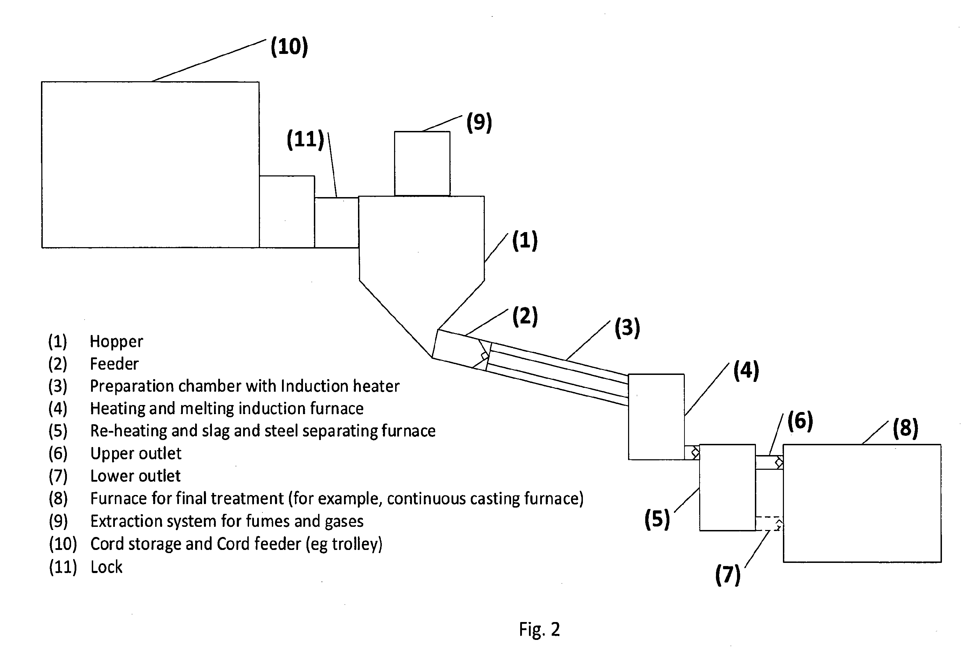

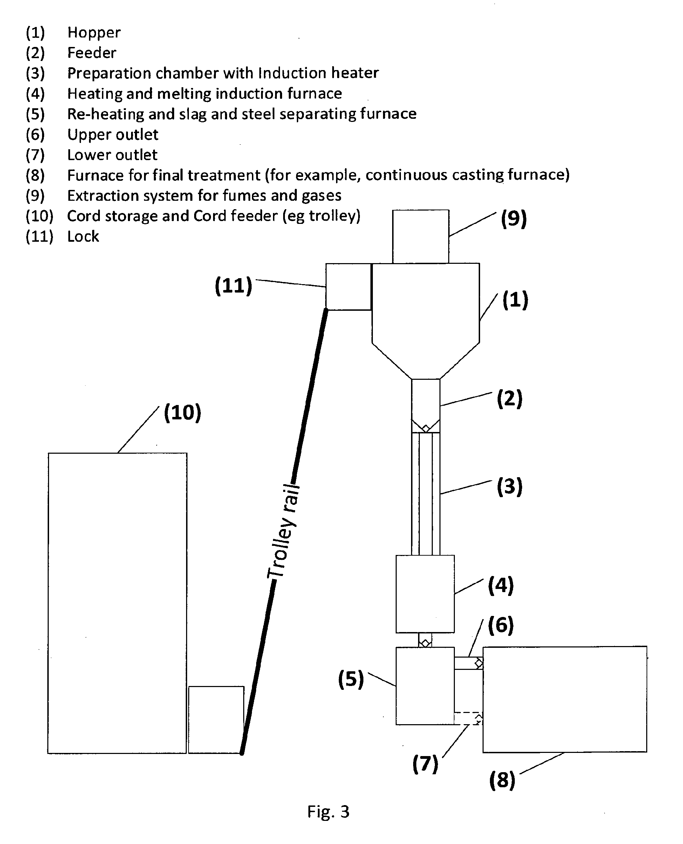

Other examples of the device solution are presented in figure 2 and 3. As far as these solutions are concerned, the cord is loaded from its storage location to the device hopper by means of a skip conveyor or other type of feeder through the lock 11 which minimises a risk of releasing gases released during heating and melting the cord, and then the cord is fed from the hopper through the feed screw or roller feeder and fed to the preparation chamber, and the process is conducted as in the example presented in figure 1; whereas, the exhaust fumes are transported upwards through the hopper 1 to the extraction system for exhaust fumes 9 and they are processed further. The speed of the feeder 2 is adjusted by means of a programme so that it is possible to supplement the feedstock in the melting furnace crucible on a current basis 4 and so that the cord from the preparation chamber 3 presses down the cord which is not melted yet in the crucible 4. The adjustment of the feeder speed 2 and of the heating power is the function of temperature in the preparation chamber 3 and in the crucible of the melting furnace 4. The melted metal flows through the overflow at the bottom of the crucible or in the wall of the crucible near the bottom to the next furnace with ceramic crucible 5, where it is heated inductively and in which there is a baffle which separates the melted metal and slag. Clean metal automatically flows from the crucible in a continuous manner to the final processing set 8, for instance, continuous casting or die-casting line. The joints between the hopper 1, the feeder 2, preparation chamber 3 and melting crucible 4 are tight which ensures that gases are released only through the extraction system for exhaust fumes 9 and thus intercepted they are subject to further processing.

## Claims

1. The method of the thermal processing of contaminated steel wire, including but not limited to the cord of worn out tyres, whose characteristic is that a thin wire with contamination is heated continuously and gradually until the stage of the wire tempering in the temperature of 600 - 1000 Centigrade, and then, through the temperature growth, a thin wire is brought to the stage of melting and separation of slag and steel in the temperature from 1450 to 1550 Centigrade, and afterwards it is advantageous to conduct the process of continuous casting or die-casting of cast iron or steel with the use of the heated steel.

2. The device for the thermal processing of contaminated thin steel wire, including but not limited to the cord of motor vehicle worn out tyres, whose characteristic is that regardless of the arrangement: vertical, diagonal or angular one, the device is equipped with hopper (1), feeder (2), induction heating chamber (3), and induction heating and melting furnace (4), re-heating and slag and steel separating furnace (5), where steel flows through the upper outlet (6) or/and lower outlet (7) to the container/furnace (8); whereas, in the vertical arrangement the extraction system for exhaust fumes and gases (9) is settled at the top of the container (1), and in the angular arrangement, it is settled at the joint of the feeder (2) and/or induction pass-through heater (3).
